# EUROPÄISCHE PATENTSCHRIFT

(11) **EP 3 063 029 B1**
(45) Veröffentlichungstag und Bekanntmachung des Hinweises auf die Patenterteilung: **23.12.2020**
(21) Anmeldenummer: 14759099.6
(22) Anmeldetag: 23.08.2014
(51) Int. Cl.: B60J 10/00, B60J 10/70

(54) **VERFAHREN ZUR BILDUNG VON DICHTUNGEN AN DICHTUNGSTRÄGERN**
METHOD FOR FORMING SEALS ON SEAL CARRIERS
PROCÉDÉ PERMETTANT DE FORMER DES JOINTS SUR DES PORTE-JOINTS

(30) Priorität: 17.09.2013 DE 102013110232; 12.02.2014 DE 102014101752
(43) Veröffentlichungstag der Anmeldung: 07.09.2016
(73) Patentinhaber: CQLT SaarGummi Technologies S.à.r.l., 5544 Remich (LU)
(72) Erfinder: KAST, Christian, 66683 Merzig-Brotdorf (DE)
(74) Vertreter: Patentanwälte Bernhardt / Wolff Partnerschaft mbB
(86) Internationale Anmeldenummer: PCT/EP2014/002314
(87) Internationale Veröffentlichungsnummer: WO 2015/039725

(56) Entgegenhaltungen:
- EP-A1- 1 452 372
- EP-A2- 2 025 489
- WO-A1-03/103921
- DE-A1-102005 028 069

## Beschreibung

Die Erfindung betrifft gemäß Oberbegriff des Anspruchs 1 ein Verfahren zur Bildung von Dichtungen an Dichtungsträgern, insbesondere Fahrzeugtüren oder-türeinfassungen, bei dem ein zu einer Vielzahl von Dichtungen zu verarbeitender, einen Hohlraum aufweisender Dichtungsmaterialstrang extrudiert, der Dichtungsmaterialstrang unter Bildung einer transportablen Einheit gewickelt oder zusammengelegt, die Einheit an einen Verarbeitungsort transportiert und der Dichtungsmaterialstrang unter Ausziehen aus der Einheit laufend einer Verarbeitungseinrichtung zugeführt wird, wobei im Rahmen der Verarbeitung jeweils ein die Dichtung bildender Abschnitt des Dichtungsmaterialstrangs auf den betreffenden Dichtungsträger aufgebracht und von dem Dichtungsmaterialstrang abgetrennt wird.

Ein Verfahren solcher Art ist z.B. aus der DE 10 2005 028 069 A1 bekannt. Vorteilhaft erlaubt dieses Verfahren die Bildungen von Fahrzeugtürdichtungen vor Ort beim Fahrzeughersteller aus endlos extrudierten Dichtungsmaterialsträngen. Herkömmlich werden solche Dichtungen vor Ort aus in bestimmter Länge und ggf. zu einem Ring vorgefertigten Dichtungssträngen hergestellt.

Durch Benutzung sind ferner in einer bestimmten Länge vorgefertigte, mit einem Hohlraum extrudierte Dichtungsstränge bekannt, die stellenweise durch Einsatzstücke aus Elastomermaterial verstärkt sind. Die Einsatzstücke werden z.B. mit Hilfe von Stäben, die mit einer Längenskala versehen sind, oder Stäben bekannter Länge in den Hohlraum eingeschoben und an die vorgesehene Längsposition gebracht. Diese Längsposition entspricht einer im verbauten Zustand des Dichtungsstrangs besonders beanspruchten Stelle, z.B. einer Biegung, an welcher durch die Verstärkung einer unerwünschten Verformung entgegenwirkt und die Form, vor allem aber auch insbesondere die daraus resultierende Dichtfunktion, aufrechterhalten wird. Lokale Verstärkungen können auch aus anderen Gründen notwendig sein.

Aus EP 2 025 482 A1 geht ein Verfahren zur Bildung von stellenweise durch eingespritztes Schaumstoffmaterial verstärkten, zur späteren Aufbringung auf Dichtungsträger an Fahrzeugkarosserien vorgesehenen Dichtungsmaterialstrangabschnitten hervor. Ein extrudierter, von einer Rolle abgewickelter Dichtungsmaterialstrang wird hierzu einer die Einspritzung bewirkenden Verarbeitungseinrichtung zugeführt.

Durch die vorliegende Erfindung wird ein neues Verfahren zur Bildung von Dichtungen aus endlos zugeführten Dichtungsmaterialsträngen der eingangs genannten Art geschaffen, das dadurch gekennzeichnet ist, dass jeweils während oder nach der Verarbeitung des Dichtungsmaterialstrangs zu einer Dichtung der die Dichtung bildende Abschnitt des Dichtungsmaterialstrangs stellenweise an wenigstens einer vorbestimmten Längsposition durch Einbringung von Material in den Hohlraum verstärkt wird.

Die stellenweise Verstärkung lässt sich sowohl während der Verarbeitung des Dichtungsmaterialstrangs als auch bei bereits mit dem Dichtungsträger teilweise oder komplett verbundenem Dichtungsmaterialstrang durchführen.

Die Einbringung des Materials kann jeweils von dem in Vorschubrichtung vorderen offenen Ende des Dichtungsmaterialstrangabschnitts aus erfolgen, insbesondere während einer beim Wechsel des Dichtungsträgers erforderlichen Vorschubpause, in welcher der Dichtungsmaterialstrangabschnitt stillsteht.

Das Material kann von dem offenen Ende her als elastischer Körper, z.B. mit Hilfe von Schubstangen oder Druckluft, oder als fließfähiges, sich zu elastisch verformbarem Material verfestigendes Material in den Hohlraum eingebracht werden.

Alternativ erfolgt die Einbringung des Materials durch Injektion von fließfähigem, sich in dem Hohlraum zu elastisch verformbarem Material verfestigendem Material durch die Hohlraumwand hindurch.

Das stellenweise eingebrachte Material kann durch Anhaftung an oder/und Formschluss mit der Hohlraumwand in Stranglängsrichtung arretiert werden, sodass die Verstärkung ihre Längsposition beibehält und sich nicht unerwünscht verschiebt.

Die Einbringung des Materials, insbesondere die Injizierung des fließfähigen Materials, während der Verarbeitung des Dichtungsmaterialstrangs kann gleichzeitig oder nacheinander an mehreren vorbestimmten Längspositionen des die Dichtung bildenden Abschnitts des Dichtungsmaterialstrangs erfolgen. In letzterem Fall kann eine einzige ortsfeste oder begrenzt bewegliche Injektionseinrichtung zum Einsatz kommen, an welcher der Dichtungsmaterialstrang im Rahmen seiner Vorschubbewegung vorbei läuft.

Die Einbringung des Materials, insbesondere die Injizierung des fließfähigen Materials, während der Verarbeitung des Dichtungsmaterialstrangs lässt sich während eines Vorschubs oder im Stillstand des Dichtungsmaterialstrangs durchführen. Zweckmäßig wird eine Vorschubpause des Dichtungsmaterialstrangs für die Injizierung genutzt, welche sich zwangsläufig durch den Abtransport eines fertig bestückten Dichtungsträgers und die Zuführung des zur Bestückung nächstfolgenden Dichtungsträgers ergibt.

In weiterer Ausgestaltung der Erfindung erfolgt die Injizierung des fließfähigen Materials während des Vorschubs unter Mitbewegung einer Injektionseinrichtung mit dem vorgeschobenen Dichtungsmaterialstrang. Bei jedem Injektionsvorgang bewegt sich die Injektionseinrichtung ein kurzes Stück parallel mit dem vorgeschobenen Dichtungsmaterialstrang mit und kehrt danach vorzugsweise selbsttätig in ihre Ausgangsposition zurück.

Zweckmäßig wird bei der Einbringung des Materials während des Vorschubs die Einbringungsposition am Dichtungsmaterialstrang anhand einer Vorschublängenmessung ermittelt.

Besonders vorteilhaft lässt sich die stellenweise Bildung von Verstärkungen durch Einbringen von Material in das eingangs erwähnte Verfahren dann integrieren, wenn bei letzterem Materialfehler detektiert und fehlerhafte Abschnitte des Dichtungsmaterialstrangs abgetrennt und ausgesondert werden und dabei insbesondere eine vereinfachte Detektierung von Fehlermarkierungen am Dichtungsmaterialstrang erfolgt. Bei notwendiger Aussonderung fehlerhafter Abschnitte wird mit der Einbringung von Verstärkungen erst in der Endphase der Bildung von Dichtungen die Menge an anfallendem Abfallmaterial verringert.

Zweckmäßig wird das fließfähige Material mit Hilfe einer die Hohlraumwand durchstoßenden oder sich durch das offene Ende hindurch in Stranglängsrichtung erstreckende Kanüle eingebracht. Die Kanüle kann die Hohlraumwand senkrecht oder schräg durchstoßen, wobei im letzteren Fall die Kanüle vorzugsweise in Vorschubrichtung des Dichtungsmaterialstrangs geneigt ist.

Bei dem fließfähigen Material kann es sich z.B. um einen mit Kautschuk modifizierten Kunststoff, insbesondere Polyether oder Polyester, handeln. Zweckmäßig verfestigt sich das integrierte fließfähige Material zu einem zellulären Material.

Das Verfahren lässt sich so durchführen, dass das Material den Hohlraum im Querschnitt nicht vollständig sondern nur teilweise derart ausfüllt, so dass ein gewünschter Verstärkungseffekt erzielt wird. In einer Ausführungsform des Verfahrens bildet das Material eine rohrartige Innenauskleidung des Hohlraums, wobei eine solche Auskleidung in Form eines Rohrs oder Teilrohrs durch Drehung des Dichtungsmaterialstrangs um seine Längsachse vor Abschluss der Verfestigung des fließfähigen Materials gebildet werden kann.

Zur Begrenzung der Ausführung des Hohlraums kann in den Hohlraum eine sich in Stranglängsrichtung erstreckende Trennwand eingebracht sein.

In einer weiteren Ausführungsform des Verfahrens wird das fließfähige Material vor Abschluss der Verfestigung durch Quetschung des Dichtungsmaterialstrangs in eine gewünschte Form gebracht, um einen bestimmten Verstärkungseffekt zu erzielen.

Die Erfindung wird nachfolgend anhand von Ausführungsbeispielen und der beiliegenden, sich auf diese Ausführungsbeispiele beziehenden Zeichnungen näher erläutert. Es zeigen:
- Fig. 1: eine nach dem erfindungsgemäßen Verfahren arbeitende Anlage zur Bildung von Dichtungen an Fahrzeugtüren aus einem endlos zugeführten Dichtungsmaterialstrang,
- Fig. 2: eine die Funktionen der Anlage von Fig. 1 erläuternde Darstellung,
- Fig. 3: verschiedene Möglichkeiten zur stellenweisen Herstellung von Verstärkungen erläuternde Detaildarstellungen,
- Fig. 4: einen Teil einer nach dem erfindungsgemäßen Verfahren arbeitenden Anlage gemäß einem weiteren Ausführungsbeispiel für die vorliegende Erfindung,
- Fig. 5: eine weitere, die Injektion von Material erläuternde Darstellung,
- Fig. 6: eine die Herstellung einer Verstärkung an einem eingebauten Dichtungsstrang durch Injektion erläuternde Darstellung,
- Fig. 7: eine die Arretierung einer Verstärkung innerhalb des Stranghohlraums erläuternde Darstellung, und
- Fig. 8: eine die Herstellung einer schlauchförmigen Verstärkung durch Injektion erläuternde Darstellung.

Ein Materialstrang 1 zur Bildung an Fahrzeugtüren 3 umlaufender Dichtungen 2 wird von einer Transport- und Vorratsrolle 4 abgewickelt und über einen Puffer 5 laufend einer die Türdichtungen erzeugenden Verarbeitungseinrichtung 6 zugeführt. Die Fahrzeugtüren 3 werden zur Bestückung taktweise an- und abtransportiert.

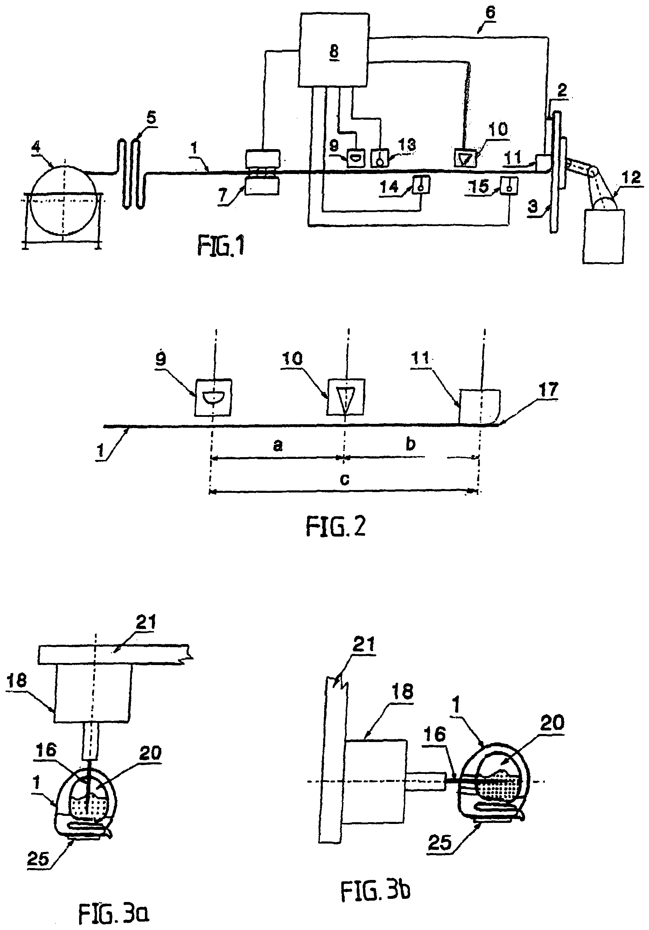

Die Verarbeitungseinrichtung 6 umfasst eine Transport- und Führungseinrichtung 7. Die in Fig.1 vereinfacht als Block dargestellte Transport- und Führungseinrichtung 7 weist neben einer Antriebsraupe über die Verarbeitungslänge des Materialstrangs 1 verteilte, im Einzelnen wie die Antriebsraupe nicht gezeigte Antriebs- und Führungsrollen auf. Die Antriebs- und Führungseinrichtung 7 steht mit einer die Verarbeitungseinrichtung 6 steuernden Einrichtung 8 in Verbindung. Die Steuereinrichtung 8 kann die Vorschubgeschwindigkeit des Materialstrangs 1 verändern und den Vorschub ggf. stoppen

Die Verarbeitungseinrichtung 6 weist in dem gezeigten Beispiel ferner eine Fehler im Materialstrang 1 erfassende Fehlererkennungseinrichtung 9 auf. In dem beschriebenen Beispiel erfasst die Fehlererkennungseinrichtung 9 optisch am Materialstrang 1 beim Stranghersteller angebrachte Markierungen (nicht gezeigt), welche fehlerhafte Strangabschnitte kennzeichnen.

Einen weiteren Bestandteil der Verarbeitungseinrichtung 6 bildet eine Trenneinrichtung 10 zum Abtrennen eines jeweils für die Bildung einer Dichtung 2 benötigten Abschnitts des Materialstrangs 1. Die Trenneinrichtung 10 empfängt Steuersignale der Steuereinrichtung 8. Die Steuereinrichtung 8 steuert ferner eine Applikationseinrichtung 11, welche jeweils den eine Dichtung 2 bildenden Abschnitt des Materialstrangs 1 auf die betreffende Fahrzeugtür 3 aufbringt und mit dieser verbindet, bzw. verklebt.

In dem beschriebenen Beispiel hält und bewegt ein Roboter 12 die Fahrzeugtür 3 relativ zu der Applikationseinrichtung 11 derart, dass durch den fortlaufend aufgebrachten Materialstrang bzw. -abschnitt ein an der Fahrzeugtür 3 umlaufender Dichtring gebildet wird, während die Applikationseinrichtung 11 an Ort und Stelle verbleibt.

Die Steuereinrichtung 8 steht ferner in Verbindung mit einer die Vorschublänge des Materialstrangs 1 erfassenden Vorschubmesseinrichtung 13. Die hier gesondert dargestellte Vorschubmesseinrichtung 13 kann in die Antriebs- und Führungseinrichtung 7 integriert sein und mit letzterer gemeinsame Funktionsteile aufweisen.

Als weitere Bestandteile weist die Verarbeitungseinrichtung 6 Injektionseinrichtungen 14 und 15 auf, welche in dem beschriebenen Beispiel an zwei Positionen jeweils in den die Dichtung 3 bildenden Abschnitt des Materialstrangs 1 in den Hohlraum 20 des Materialstrangs 1 ein fließfähiges Material 19 einbringen, das sich verfestigt und eine Verstärkung bildet. An den betreffenden Stellen ist die aus dem Abschnitt gebildete Dichtung besonders beansprucht, z.B. durch gebogene Verlegung.

Die durch die Steuereinrichtung 8 gesteuerten Injektionseinrichtungen 14,15 weisen eine Injektionskanüle 16 auf, welche die Hohlraumwand des Materialstrangs 1 durchdringt. Die Injektionseinrichtungen 14,15 können über die Injektionsdauer mit dem Materialstrang 1 mitgeführt werden, sodass eine Injektion noch während der Aufbringung des die Dichtung 2 bildenden Materialstrangabschnitts auf die Fahrzeugtür 3 durchführbar ist. Messwerte der Vorschubmesseinrichtung 13 werden durch die Steuereinrichtung 8 jeweils integriert und gespeichert.

Zu jedem Startzeitpunkt eines Applikationsvorgangs, bei welchem der Vorschub des Materialstrangs 1 neu gestartet und ein Materialstrangabschnitt der Länge c unter Bildung einer Dichtung 2 verarbeitet wird, setzt die Steuereinrichtung 8 den Vorschublängenwert auf den Wert b, der gemäß Fig. 2 dem Abstand der Trenneinrichtung 10 bis zum freien Ende 17 des Materialstrangs 1 entspricht. Erreicht während der Verarbeitung des Materialstrangs 1 durch die Applikationseinrichtung 11 der zu b addierte Wert der gemessenen Vorschublänge den Wert c, welcher gleich der Länge des die Dichtung 2 bildenden Abschnitts des Materialstrangs 1 ist, so sendet die Steuereinrichtung 8 ein Signal zur Trennung des Materialstrangs 1 an die Trenneinrichtung 10. Der Materialstrang 1 und der abgetrennte Abschnitt werden weiter befördert, bis das neu gebildete freie Ende des Materialstrangs 1 seinen Ausgangswert für den nächsten Applikationsvorgang erreicht hat. Gegebenenfalls wird ein diese Endposition anzeigendes Signal eines (nicht gezeigten) Anschlagsschalters an die Steuereinrichtung 8 abgegeben.

Vor jedem Neustart eines Applikationsvorgangs oder währenddessen, erzeugt die Steuereinrichtung 8 ferner ein Signal zum Injizieren von Material durch die Injektionseinrichtungen 14,15. Erstreckt sich die Injektion zeitlich auf den Applikationsvorgang, so werden die Injektionseinrichtungen 14,15 dem Strang vorübergehend nachgeführt und kehren dann in ihre Ausgangsposition zurück.

Durch Zuführen des Strangs über Puffer kann ein Strangabschnitt zwecks Injektion auch stillgesetzt werden.

Für den Fall, dass die Fehlererkennungseinrichtung 9 einen fehlerhaften Strangabschnitt ermittelt, verfolgt die Steuereinrichtung 8 den Vorschublängenwert für das in Vorschubrichtung hintere Ende des fehlerhaften Strangabschnitts von der Fehlererkennungseinrichtung 9 an und sendet, wenn die Vorschublänge für das hintere Ende gleich dem Abstand a zwischen der Fehlererkennungseinrichtung 9 und der Trenneinrichtung 10 ist, ein Signal zur Abtrennung des den fehlerhaften Strangabschnitt aufweisenden Strangendes an die Trenneinrichtung 10. Eine (nicht gezeigte) Aussonderungseinrichtung führt das fehlerhafte Strangende zur Entsorgung ab.

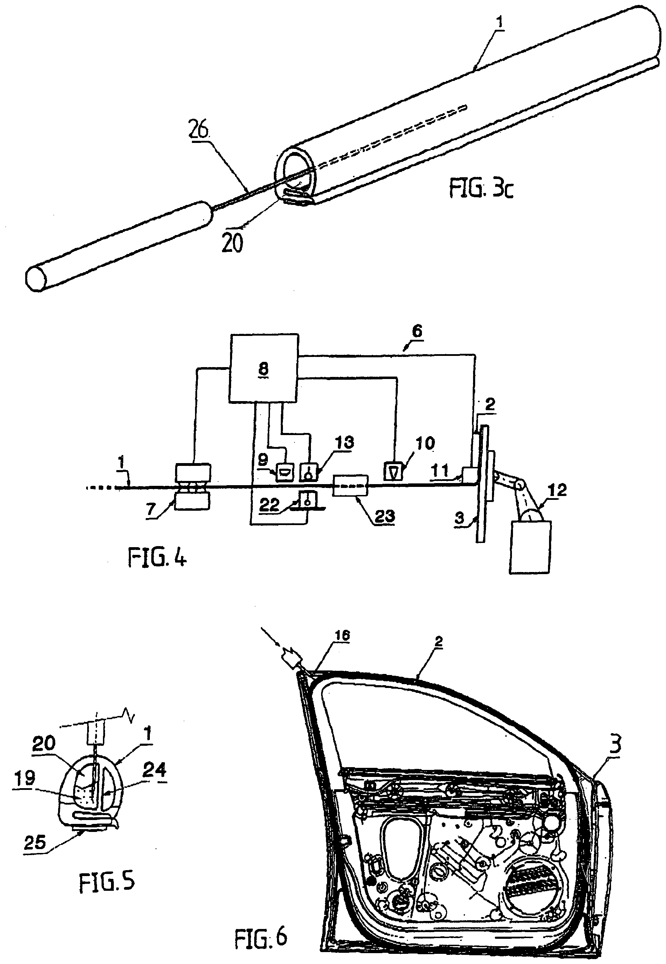

Wie aus Fig. 3 hervorgeht, weisen die Injektionseinrichtungen 14,15 neben der schon erwähnten Injektionskanüle 16 durch die Steuereinrichtung 8 ansteuerbare Einrichtungen 18 zum Ausfahren der Injektionskanüle 16 auf. Beim Ausfahren dringt sie in den Hohlraum 20 des Materialstrangs 1 ein, wobei ihr abgeschrägtes Ende in der Hohlraumwand einen kaum erkennbaren Schlitz hinterlässt. Der Schlitz könnte zudem in einem nicht sichtbaren Bereich des Strangs gebildet sein.

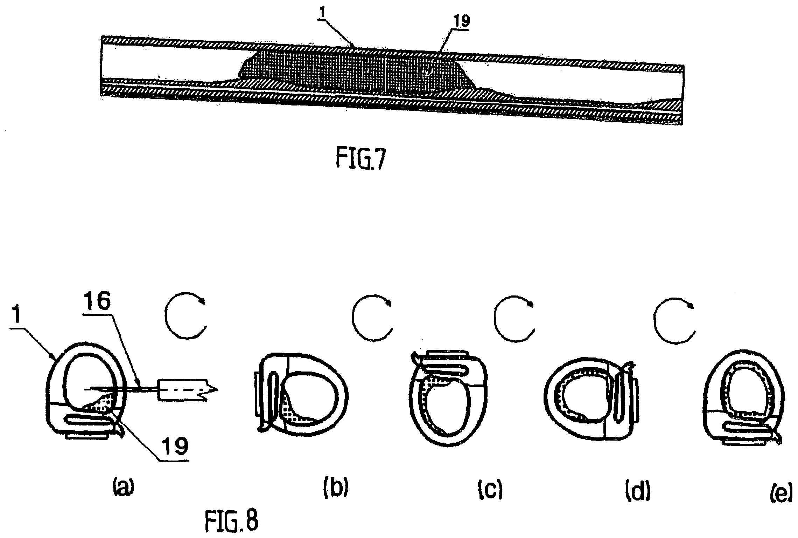

In den Hohlraum 20 des Materialstrangs 1 über die Injektionskanüle 16 eingebrachtes fließfähiges Material 19 besteht in dem beschriebenen Beispiel aus einkomponentigem Polyester oder Polyether, das mit Kautschuk modifiziert ist und in dem Hohlraum 20 ggf. unter Anhaftung an der Hohlraumwand zu einem zellulären, flexiblen Material aushärtet. Vorteilhaft ist die Verstärkung durch die Anhaftung des Materials an der Hohlraumwand in Stranglängsrichtung arretiert. Eine solche Arretierung kann gemäß Fig. 7 auch durch Formschluss erreicht werden, indem die Hohlraumwand z.B. mit in Stranglängsrichtung wiederkehrenden Vorsprüngen oder/und Vertiefungen versehen wird.

Die Ausfahreinrichtung 18 ist an einer zum Dichtungsmaterialstrang parallelen Führung 21 schlittenartig verschiebbar, sofern die Injektion während des Vorschubs des Materialstrangs 1 erfolgt. Alternativ könnte die Ausfahreinrichtung 18 bei Injektion während des Vorschubs auch an einer Trommel angebracht und mit dieser mitgedreht werden, wobei der transportierte Dichtungsmaterialstrang um die Trommel herum gewunden ist.

Wie anhand von Fig. 4 dargestellt ist, kann eine Materialinjektion auch schon während des Vorschubs des Materialstrangs 1 erfolgen, bevor das jeweils freie Ende des Materialstrangs den Ausgangspunkt für den nächsten Applikationsvorgang erreicht hat, wobei eine einzige Injektionseinrichtung 22, wie sie in Fig. 4 gezeigt ist, während des Vorschubs nacheinander an verschiedenen Stellen zu verfestigendes Material 19 in den Hohlraum 20 einführt. Während der Injektionsphase wird die Injektionsrichtung 22 entlang der Führung 21 mit dem Materialstrang 1 mitbewegt.

Eine Steuereinrichtung 8 ermittelt mit Hilfe einer Vorschubmesseinrichtung 13 die jeweiligen Zeitpunkte, zu denen während des Vorschubs die Injektionseinrichtung 22 aktiv wird. Eine der Injektionseinrichtung 22 nachgeschaltete Drehführungseinrichtung 23 verdreht den Materialstrang 1 um seine Längsachse. Durch diese Drehung legt sich das Material 19 rundum gegen die Innenwand des Hohlraums 20 an und bildet bei Drehung um 360°, wie Fig. 8 zeigt, eine schlauchartige Verstärkung, durch die der Hohlraumquerschnitt im Verstärkungsbereich nur teilweise ausgefüllt ist.

Eine weitere Möglichkeit zur begrenzten Füllung injizierten Materials 19 in einen Hohlraum 20 ist in Fig. 5 gezeigt. Das Material 19 füllt den Hohlraum im Querschnitt nur teilweise aus, da der Hohlraum 20 durch eine Trennwand 24 geteilt ist.

Das Bezugszeichen 25 in Fig. 5 bezeichnet ein doppeltklebendes Klebeband zur Befestigung des Materialstrangs 1an der Fahrzeugtür 3.

Alternativ zu der beschriebenen Materialinjektion durch die Hohlraumwand hindurch könnte, insbesondere während einer bei Türwechsel erforderlichen Beförderungspause des Dichtungsstrangmaterialsabschnitts der Länge c, die Einbringung von Material durch das in Vorschubrichtung vordere offene Ende des Abschnitts hindurch erfolgen.

Hierbei wäre der Einschub von stopfenartigen Materialstücken mit Hilfe von Stangen unter Messung der Einschublänge der Stangen in den Hohlraum möglich. Alternativ könnte an den betreffenden Längspositionen des Abschnitts der Länge c jeweils ein Anschlag für das Materialstück von außen durch die Hohlraumwand in den Hohlraum eingebracht oder durch Verengung des Hohlraums gebildet werden. Solche Anschläge ließen sich insbesondere beim Einbringen stopfenartiger Materialstücke mittels Druckluft vorteilhaft verwenden.

Schließlich kann gemäß Fig. 3c auch unter Messung der Einschublänge eine sich in Stranglängsrichtung erstreckende Leitungslanze 26 in den Hohlraum eingeschoben werden, um fließfähiges, sich an Ort und Stelle zu einem elastisch verformbaren Material verfestigendes Material einzubringen.

Fig. 3b zeigt die Herstellung einer Verstärkung durch Einbringen fließfähigen Materials durch eine schon vorhandene Öffnung in der Wand des Hohlraums.

Eine nachträgliche Herstellung einer Verstärkung am fertig eingebauten Dichtungsstrang durch Injizieren geht aus Fig. 6 hervor.

## Patentansprüche

1. Verfahren zur Bildung von Dichtungen (2) an Dichtungsträgern, insbesondere Fahrzeugtüren (3) oder -türeinfassungen, bei dem ein zu einer Vielzahl von Dichtungen (2) zu verarbeitender, einen Hohlraum (20) aufweisender Dichtungsmaterialstrang (1) extrudiert, der Dichtungsmaterialstrang (1) unter Bildung einer transportablen Einheit gewickelt oder zusammengelegt, die transportable Einheit an einen Verarbeitungsort transportiert und der Dichtungsmaterialstrang (1) am Verarbeitungsort unter Auszug aus der transportablen Einheit laufend einer Verarbeitungseinrichtung (6) zugeführt wird, wobei im Rahmen der Verarbeitung jeweils ein die Dichtung (2) bildender Abschnitt des Dichtungsmaterialstrangs (1) auf den betreffenden Dichtungsträger aufgebracht und von dem Dichtungsmaterialstrang (1) abgetrennt wird,
**dadurch gekennzeichnet,**
**dass** jeweils während oder nach der Verarbeitung des Dichtungsmaterialstrangs (1) zu einer Dichtung (2) der die Dichtung (2) bildende Abschnitt des Dichtungsmaterialstrangs (1) stellenweise an wenigstens einer vorbestimmten Längsposition des Abschnitts durch Einbringung von Material (19) in den Hohlraum (20) verstärkt wird.

2. Verfahren nach Anspruch 1,
**dadurch gekennzeichnet,**
**dass** die Einbringung des Materials (19) durch Einleitung oder Einführung in den Hohlraum (20) von dem in Vorschubrichtung vorderen offenen Ende des Abschnitts her erfolgt oder das Material als fließfähiges, sich zu elastisch verformbarem Material verfestigendes Material durch die Hohlraumwand hindurch in den Hohlraum injiziert wird.

3. Verfahren nach Anspruch 2,
**dadurch gekennzeichnet,**
**dass** das Material von dem offenen Ende her als fester Körper oder fließfähiges, sich zu elastisch verformbarem Material verfestigendes Material in den Hohlraum (20) eingeleitet wird.

4. Verfahren nach einem der Ansprüche 1 bis 3,
**dadurch gekennzeichnet,**
**dass** die Einbringung des Materials, insbesondere die Injizierung des fließfähigen Materials (19), während der Verarbeitung des Dichtungsmaterialstrangs (1) gleichzeitig oder nacheinander an mehreren vorbestimmten Längspositionen des die Dichtung (2) bildenden Abschnitts des Dichtungsmaterialstrangs (1) erfolgt.

5. Verfahren nach einem der Ansprüche 1 bis 4,
**dadurch gekennzeichnet,**
**dass** die Einbringung des Materials, insbesondere die Injizierung des fließfähigen Materials (19), während der Verarbeitung des Dichtungsmaterialstrangs (1) bei laufendem Vorschub oder im Stillstand des Dichtungsmaterialstrangs (1) erfolgt.

6. Verfahren nach Anspruch 5,
**dadurch gekennzeichnet,**
**dass** die Injizierung des fließfähigen Materials bei laufendem Vorschub unter Mitbewegung einer Injektionseinrichtung (14,15; 22) mit dem vorgeschobenen Dichtungsmaterialstrang (1) oder im Stillstand des Dichtungsmaterialsstrangs erfolgt.

7. Verfahren nach Anspruch 5 oder 6,
**dadurch gekennzeichnet,**
**dass** bei Einbringung des Materials, insbesondere Injizierung des fließfähigen Materials (19), bei laufendem Vorschub des Dichtungsmaterialstrangs (1) die Längsposition für die Einbringung anhand einer Vorschublängenmessung ermittelt wird.

8. Verfahren nach einem der Ansprüche 2 bis 7,
**dadurch gekennzeichnet,**
**dass** das fließfähige Material (19) mit Hilfe einer die Hohlraumwand durchstoßenden Kanüle (16) in den Hohlraum (20) injiziert oder einer sich durch die Öffnung am vorderen offenen Ende hindurch in Stranglängsrichtung erstreckenden Leitungslanze (26) in den Hohlraum (20) eingeleitet wird.

9. Verfahren nach einem der Ansprüche 1 bis 8,
**dadurch gekennzeichnet,**
**dass** als fließfähiges Material (19) ein mit Kautschuk modifizierter Polyester oder Polyether injiziert bzw. eingeleitet wird.

10. Verfahren nach einem der Ansprüche 1 bis 9,
**dadurch gekennzeichnet,**
**dass** das Material (19) den Hohlraum (20) im Querschnitt nur teilweise ausfüllt.

11. Verfahren nach Anspruch 10,
**dadurch gekennzeichnet,**
**dass** das Material (19) als Verstärkung eine rohrartige Innenauskleidung des Hohlraums (20) bildet.

12. Verfahren nach Anspruch 11,
**dadurch gekennzeichnet,**
**dass** die rohrartige Innenauskleidung durch Drehung des Dichtungsmaterialstrangs (1) um seine Längsachse vor Abschluss der Verfestigung des fließfähigen Materials (19) gebildet wird.

13. Verfahren nach einem der Ansprüche 1 bis 12,
**dadurch gekennzeichnet,**
**dass** in den Hohlraum (20) eine die Ausbreitung des fließfähigen Materials (19) begrenzende Trennwand (24) eingebracht wird.

14. Verfahren nach einem der Ansprüche 2 bis 13,
**dadurch gekennzeichnet,**
**dass** das injizierte bzw. eingeleitete fließfähige Material (19) vor Abschluss der Verfestigung durch Verformung des Dichtungsmaterialstrangs (1) in eine gewünschte Form gebracht wird, ggf. unter Einschluss des fließfähigen Materials durch Quetschung des Dichtungsmaterialstrangs.

15. Verfahren nach einem der Ansprüche 1 bis 14,
**dadurch gekennzeichnet,**
**dass** das Material (19) in Stranglängsrichtung durch Anhaftung an oder Formschluss mit der Wand des Hohlraums (20) arretiert wird.

16. Verfahren nach einem der Ansprüche 2 bis 15,
**dadurch gekennzeichnet,**
**dass** das fließfähige Material (19) in den Hohlraum (20) injiziert wird, nachdem der Abschnitt des Dichtungsmaterialstrangs (1) teilweise oder komplett auf den Dichtungsträger aufgebracht worden ist.

## Claims

1. Method for forming seals (2) on seal carriers, in particular vehicle doors (3) or vehicle door frames, in which a sealing material strand (1) which is to be processed to form a multiplicity of seals (2) and has a cavity (20) is extruded, the sealing material strand (1) is coiled or folded up to form a transportable unit, the transportable unit is transported to a processing site and, at the processing site, the sealing material strand (1) is continuously supplied, by being pulled out of the transportable unit, to a processing device (6), wherein, within the scope of the processing, in each case a portion of the sealing material strand (1) that forms the seal (2) is applied to the respective seal carrier and severed from the sealing material strand (1),
**characterized in that**
in each case, during or after the processing of the sealing material strand (1) to form a seal (2), the portion of the sealing material strand (1) that forms the seal (2) is reinforced at at least one predetermined longitudinal position of the portion by introducing material (19) into the cavity (20).

2. Method according to Claim 1,
**characterized in that**
the material (19) is introduced by being inserted or guided into the cavity (20) from the open end of the portion that is at the front in the feed direction, or the material is injected through the cavity wall into the cavity in the form of a fluid material which solidifies to form an elastically deformable material.

3. Method according to Claim 2,
**characterized in that**
the material is inserted into the cavity (20) from the open end in the form of a solid body or a fluid material which solidifies to form an elastically deformable material.

4. Method according to one of Claims 1 to 3,
**characterized in that**
the material is introduced, in particular the fluid material (19) is injected, over the course of the processing of the sealing material strand (1) at the same time or successively at a plurality of predetermined longitudinal positions of the portion of the sealing material strand (1) that forms the seal (2).

5. Method according to one of Claims 1 to 4,
**characterized in that**
the material is introduced, in particular the fluid material (19) is injected, over the course of the processing of the sealing material strand (1) while the sealing material strand (1) is being continuously fed or is at a standstill.

6. Method according to Claim 5,
**characterized in that**
the fluid material is injected during continuous feeding by a conjoint movement of an injection device (14, 15; 22) with the sealing material strand (1) which is fed or while the sealing material strand is at a standstill.

7. Method according to Claim 5 or 6,
**characterized in that**
during the introduction of the material, in particular the injection of the fluid material (19), when the sealing material strand (1) is being continuously fed, the longitudinal position for the introduction is determined on the basis of a feed length measurement.

8. Method according to one of Claims 2 to 7,
**characterized in that**
the fluid material (19) is injected into the cavity (20) using a cannula (16) which punctures the cavity wall or is inserted into the cavity (20) using a directing lance (26) extending through the opening at the front open end in the longitudinal direction of the strand.

9. Method according to one of Claims 1 to 8,
**characterized in that**
a polyester or polyether modified with rubber is injected or inserted as the fluid material (19).

10. Method according to one of Claims 1 to 9,
**characterized in that**
the material (19) only partially fills the cavity (20) in cross section.

11. Method according to Claim 10,
**characterized in that**
the material (19) as reinforcement forms a tube-like interior lining of the cavity (20).

12. Method according to Claim 11,
**characterized in that**
the tube-like interior lining is formed by turning the sealing material strand (1) about its longitudinal axis before the fluid material (19) has finished solidifying.

13. Method according to one of Claims 1 to 12,
**characterized in that**
a partition wall (24) which delimits the expansion of the fluid material (19) is introduced into the cavity (20).

14. Method according to one of Claims 2 to 13,
**characterized in that**,
before the conclusion of the solidification, the injected or inserted fluid material (19) is brought into a desired shape by deformation of the sealing material strand (1), optionally by enclosing the fluid material by pinching the sealing material strand.

15. Method according to one of Claims 1 to 14,
**characterized in that**
the material (19) is blocked in the longitudinal direction of the strand by adhering to or entering into a form fit with the wall of the cavity (20).

16. Method according to one of Claims 2 to 15,
**characterized in that**
the fluid material (19) is injected into the cavity (20) once the portion of the sealing material strand (1) has been partially or completely applied to the seal carrier.

## Revendications

1. Procédé pour la formation de joints (2) sur des porte-joints, en particulier sur des portes (3) de véhicule ou sur des encadrements de porte de véhicule, dans lequel un brin (1) de matériau d'étanchéité présentant un espace creux (20) à transformer en une multitude de joints (2) est extrudé, le brin (1) de matériau d'étanchéité est enroulé ou regroupé pour la formation d'une unité transportable, l'unité transportable est transportée en un site de transformation et le brin (1) de matériau d'étanchéité est introduit en continu, sur le site de transformation, par traction depuis l'unité transportable, dans un dispositif de transformation (6), une section du brin (1) de matériau d'étanchéité formant le joint (2) étant à chaque fois appliquée sur le porte-joint en question et séparée du brin (1) de matériau d'étanchéité dans le cadre de la transformation, **caractérisé en ce que**, à chaque fois, pendant ou après la transformation du brin (1) de matériau d'étanchéité en un joint (2), la section du brin (1) de matériau d'étanchéité formant le joint (2) est renforcée par endroits en au moins une position longitudinale prédéfinie de la section par introduction de matière (19) dans l'espace creux (20).

2. Procédé selon la revendication 1, **caractérisé en ce que** l'introduction de la matière (19) est effectuée par introduction ou par insertion dans l'espace creux (20) à partir de l'extrémité ouverte avant dans le sens d'avancement de la section ou la matière est injectée dans l'espace creux sous forme de matière pouvant s'écouler, se solidifiant en matériau élastiquement déformable, à travers la paroi de l'espace creux.

3. Procédé selon la revendication 2, **caractérisé en ce que** la matière est introduite dans l'espace creux (20) à partir de l'extrémité ouverte sous forme de corps solide ou sous forme de matière pouvant s'écouler, se solidifiant en matériau élastiquement déformable.

4. Procédé selon l'une quelconque des revendications 1 à 3, **caractérisé en ce que** l'introduction de la matière, en particulier l'injection de la matière (19) pouvant s'écouler, a lieu pendant la transformation du brin (1) de matériau d'étanchéité, simultanément ou successivement en plusieurs positions longitudinales prédéfinies de la section formant le joint (2) du brin (1) de matériau d'étanchéité.

5. Procédé selon l'une quelconque des revendications 1 à 4, **caractérisé en ce que** l'introduction de la matière, en particulier l'injection de la matière (19) pouvant s'écouler, a lieu pendant la transformation du brin (1) de matériau d'étanchéité, lors de l'avancement continu ou à l'arrêt du brin (1) de matériau d'étanchéité.

6. Procédé selon la revendication 5, **caractérisé en ce que** l'injection de la matière pouvant s'écouler a lieu lors de l'avancement continu avec un déplacement simultané d'un dispositif d'injection (14,15 ; 22) avec le brin (1) de matériau d'étanchéité qui avance ou à l'arrêt du brin (1) de matériau d'étanchéité.

7. Procédé selon la revendication 5 ou 6, **caractérisé en ce que** lors de l'introduction de la matière, en particulier de l'injection de la matière (19) pouvant s'écouler, lors de l'avancement continu du brin (1) de matériau d'étanchéité, la position longitudinale pour l'introduction est déterminée à l'aide d'une mesure de la longueur d'avancement.

8. Procédé selon l'une quelconque des revendications 2 à 7, **caractérisé en ce que** la matière (19) pouvant s'écouler est injectée dans l'espace creux (20) à l'aide d'une canule passant à travers la paroi de l'espace creux ou est introduite dans l'espace creux (20) à l'aide d'une lance de guidage (26) s'étendant à travers l'ouverture au niveau de l'extrémité ouverte avant dans la direction longitudinale du brin.

9. Procédé selon l'une quelconque des revendications 1 à 8, **caractérisé en ce qu'**on injecte ou introduit, en tant que matière (19) pouvant s'écouler, un polyester ou un polyéther modifié par du caoutchouc.

10. Procédé selon l'une quelconque des revendications 1 à 9, **caractérisé en ce que** la matière (19) ne remplit que partiellement l'espace creux (20) dans la section transversale.

11. Procédé selon la revendication 10, **caractérisé en ce que** la matière (19) forme un revêtement interne tubulaire de l'espace creux (20) en tant que renforcement.

12. Procédé selon la revendication 11, **caractérisé en ce que** le revêtement interne tubulaire est formé par rotation du brin (1) de matériau d'étanchéité autour de son axe longitudinal avant la fin de la solidification de la matière (19) pouvant s'écouler.

13. Procédé selon l'une quelconque des revendications 1 à 12, **caractérisé en ce qu'**une paroi de séparation (24) limitant une expansion de la matière (19) pouvant s'écouler est introduite dans l'espace creux (20).

14. Procédé selon l'une quelconque des revendications 2 à 13, **caractérisé en ce que** la matière (19) pouvant s'écouler injectée ou introduite est amenée sous une forme souhaitée avant la fin de la solidification par déformation du brin (1) de matériau d'étanchéité, le cas échéant avec inclusion de la matière pouvant s'écouler par écrasement du brin de matériau d'étanchéité.

15. Procédé selon l'une quelconque des revendications 1 à 14, **caractérisé en ce que** la matière (19) s'est arrêtée dans la direction longitudinale du brin par adhérence à la paroi de l'espace creux (20) ou par liaison par complémentarité de forme à celle-ci.

16. Procédé selon l'une quelconque des revendications 2 à 15, **caractérisé en ce que** la matière (19) pouvant s'écouler est injectée dans l'espace creux (20) après application partielle ou complète de la section du brin (1) de matériau d'étanchéité sur le porte-joint.
